# EUROPEAN PATENT APPLICATION

(11) **EP 3 185 483 A1**
(43) Date of publication of application: **28.06.2017**
(21) Application number: 16205127.0
(22) Date of filing: 19.12.2016
(51) Int. Cl.: H04L 12/28

(54) **METHOD, DEVICE AND SYSTEM FOR INTELLIGENT HOUSEHOLD APPLIANCE TO ACCESS MULTIPLE SERVERS**

(30) Priority: 22.12.2015 CN 201510974376
(71) Applicant: Xiaomi Inc., Beijing 100085 (CN)
(72) Inventor: ZHANG, Yanlu, Beijing 100085 (CN); HOU, Enxing, Beijing 100085 (CN); SU, Benchang, Beijing 100085 (CN)
(74) Representative: Jeffrey, Philip Michael

(57) **Abstract**

The present disclosure relates to a method, device and system for an intelligent household appliance to access multiple servers and belongs to intelligent device field. The method includes: establishing (101, 201, 301) communication connections with N servers, wherein N is an integer equal to or greater than 2, and the N servers belong to different manufacturers; generating (102) information related to the intelligent household appliance; and sending (103, 203, 305) the information related to the intelligent household appliance to the N servers. Thus, the multiple servers can obtain the information related to the intelligent household appliance which is generated by the intelligent household appliance to avoid dispute between manufacturers.

## Description

### TECHNICAL FIELD

The present disclosure generally relates to intelligent device technologies, and more particularly, to a method, device and system for an intelligent household appliance to access multiple servers.

### BACKGROUND

At present, household appliances have been more and more intelligent, and this has become a future development trend in household appliance field. The intellectualization of a household appliance refers to incorporating a wireless communication chip such as WiFi or Bluetooth which is capable of accessing the Internet directly or indirectly into the household appliance to make the household appliance capable of accessing the Internet. In this way, not only users can check the operation status of the household appliance and control the appliance remotely using client software in mobile phones, but also servers can collect device information of the household appliance and recordings about users' operation on the household appliance.

Currently, manufacturers of household appliances are good at manufacturing the household appliances but are weak in wireless communication technologies. Thus, the manufacturers of household appliances need to incorporate wireless communication devices of another party in household appliances to make the household appliances capable of accessing the Internet to transmit various information regarding the household appliances to servers. However, whether the various information regarding the household appliances should be transmitted to the servers belonging to the manufacturers of the household appliances or the servers belonging to the manufacturers of the wireless communication devices has become a focus of dispute now.

### SUMMARY

Embodiments of the present disclosure provide a method, device and system for an intelligent household appliance to access multiple servers. The technical solutions are as follows.

According to a first aspect of embodiments of the present disclosure, there is provided a method for an intelligent household appliance to access multiple servers, including:
establishing communication connections with N servers, wherein N is an integer equal to or greater than 2, and the N servers belong to different manufacturers;
generating information related to the intelligent household appliance; and
sending the information related to the intelligent household appliance to the N servers.

According to a second aspect of embodiments of the present disclosure, there is provided a device for an intelligent household appliance to access multiple servers, including:
an establishing module configured to establish communication connections with N servers, wherein N is an integer equal to or greater than 2, and the N servers belong to different manufacturers;
a generation module configured to generate information related to the intelligent household appliance; and
a sending module configured to send the information related to the intelligent household appliance to the N servers.

According to a third aspect of embodiments of the present disclosure, there is provided a device for an intelligent household appliance to access multiple servers, including:
a processor; and
a memory for storing instructions executable by the processor;
wherein the processor is configured to:
establish communication connections with N servers, wherein N is an integer equal to or greater than 2, and the N servers belong to different manufacturers;
generate information related to the intelligent household appliance; and
send the information related to the intelligent household appliance to the N servers.

According to a fourth aspect of embodiments of the present disclosure, there is provided a system for an intelligent household appliance to access multiple servers, including:
an intelligent household appliance and N servers, wherein N is an integer equal to or greater than 2;
wherein the intelligent household appliance includes the device according to the second or third aspect.

According a fifth aspect of embodiments of the present disclosure, there is provided a computer program, which when executed on a processor, performs a method according to the first aspect.

The technical solutions provided can have the following advantageous effects:

Communication connections are established with N servers, and information related to an intelligent household appliance is sent to the N servers after the information related to the intelligent household appliance is generated. Thus, the multiple servers can obtain the information related to the intelligent household appliance generated by the intelligent appliance to avoid the dispute between manufacturers.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for an intelligent household appliance to access multiple servers according to an exemplary embodiment.
Fig. 2 is a flow chart of a method for an intelligent household appliance to access multiple servers according to another exemplary embodiment.
Fig. 3 is a flow chart of a method for an intelligent household appliance to access multiple servers according to another exemplary embodiment.
Fig. 4 is a block diagram of a device for an intelligent household appliance to access multiple servers according to an exemplary embodiment.
Fig. 5 is a block diagram of a device for an intelligent household appliance to access multiple servers according to an exemplary embodiment.
Fig. 6 is a block diagram of a device for an intelligent household appliance to access multiple servers according to an exemplary embodiment.
Fig. 7 is a block diagram of a device 700 for an intelligent household appliance to access multiple servers according to an exemplary embodiment.
Fig. 8 is a block diagram of a system for an intelligent household appliance to access multiple servers according to an exemplary embodiment.

Embodiments of the present disclosure have been presented by the above drawings, and detailed descriptions will be provided later. The drawings and text descriptions here are not for restricting the scope of the disclosure in any way but for explaining the concept of the present disclosure to one of ordinary skill in this art with particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

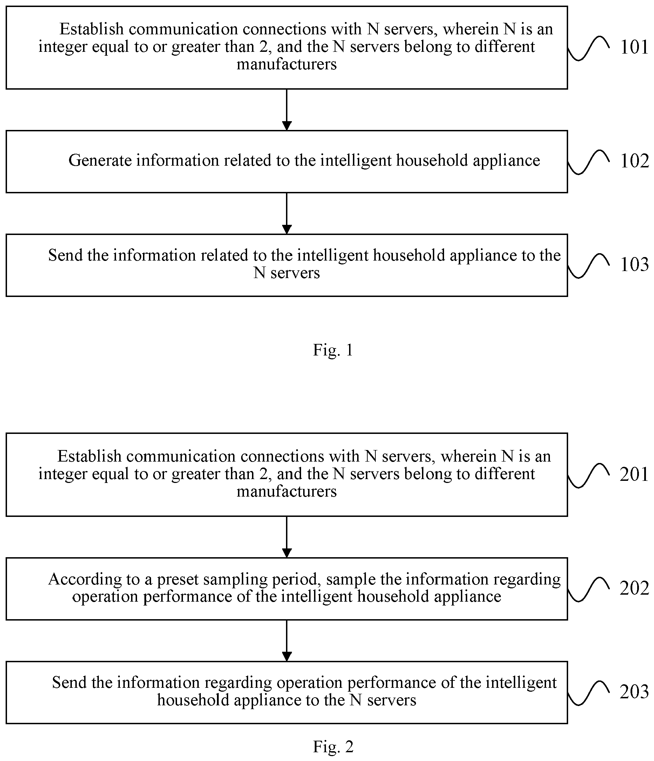

Fig. 1 is a flow chart of a method for an intelligent household appliance to access multiple servers according to an exemplary embodiment. In the present embodiment, for example, the method for an intelligent household appliance to access multiple servers is applied in an intelligent household appliance. The method for the intelligent household appliance to access multiple servers can include the following steps.

In step 101, communication connections are established with N servers, N is an integer equal to or greater than 2, and the N servers belong to different manufacturers.

In step 102, information related to the intelligent household appliance is generated.

In step 103, the information related to the intelligent household appliance is sent to the N servers.

In the present embodiment, the intelligent household appliance can establish communication connections with the N servers, N is an integer equal to or greater than 2, and the N servers can belong to different manufacturers. For example, N equals to 3, one of the servers belongs to a manufacturer of the intelligent household appliance, another one of the servers belongs to a manufacturer which manufacturers the device for implementing the method of the present disclosure (the device for implementing the method of the present disclosure can be set in the intelligent household appliance), and yet another one of the servers belongs to a manufacturer which manages the intelligent household appliance. The manufacturer of the device for implementing the method of the present disclosure and the manufacturer which manages the intelligent household appliance can be the same one. Here, N can be equal to 2, i.e. one server belongs to the manufacturer which manufactures the intelligent household appliance, for example, Midea Group (RTM) or Gree Electric Appliances Inc. (RTM), and the like, and the other server belongs to the manufacturer which manages the application programs of the intelligent household appliance, for example, Xiaomi Inc. (RTM), and the like.

According to an embodiment, step 101 may be implemented by: obtaining communication addresses of the N servers which are preset in the intelligent household appliance; and according to the communication addresses of the N servers, establishing the communication connections with the N servers. The communication address of the N servers can be Internet Protocol (IP) addresses, or Media Access Control (MAC) addresses, and the like.

After the intelligent household appliance establishes communication connections with the N servers, it is indicated that the intelligent appliance can communicate with the N servers to transmit information. The intelligent household appliance can generate information related to the intelligent household appliance, and then send the generated information related to the intelligent household appliance to the N servers. In this way, all of the N servers can obtain the information related to the intelligent household appliance, and thus manufacturers can perform analysis on the information according to their own needs.

According to an embodiment, the above generated information related to the intelligent household appliance can include at least one of: information regarding operation performance of the intelligent household appliance and information regarding an operation activity of a user performed on the intelligent household appliance. The information regarding operation performance of the intelligent household appliance may include: information regarding operation parameters of the intelligent household appliance, and information regarding environment parameters when the intelligent household appliance is operating. For example, if the intelligent household appliance is an air conditioner, the information regarding the operation performance of the air conditioner can include: the temperature when the air conditioner is running, the operation duration, the temperature and humidity of the environment when the air conditioner is operating. The information regarding the operation activity of a user performed on the intelligent household appliance can include: the time when the air conditioner is started by the user, the operation duration set by the user, the temperature for operation set by the user, and the like.

According to an embodiment, step 103 can be implemented by the following approaches.

In a first possible implementation, after generating the information related to the intelligent household appliance, the intelligent household appliance sends the generated information related to the intelligent household appliance to the N servers in real time.

In a second possible implementation, the intelligent household appliance can send the information related to the intelligent household appliance to the N servers at a predefined time interval. For example, the intelligent sends the information related to the intelligent household appliance to the N servers every hour. The sent information related to the intelligent household appliance is generated within the hour.

In a third possible implementation, according to the predefined time interval corresponding to each of the servers, the intelligent household appliance sends the information related to the intelligent household appliance to the N servers. For example, N equals to 2, the predefined time interval corresponds to the first server is 30 minutes, and the predefined time interval corresponds to the second server is one hour. The intelligent household appliance can send the first server the information related to the intelligent household appliance every 30 minutes which are generated within the 30 minutes, and send the second server the information related to the intelligent household appliance every hour which are generated within the hour.

In view of the above, in the method for an intelligent household appliance to access multiple servers provided by the present embodiment, communication connections are established with N servers, and information related to an intelligent household appliance is sent to the N servers after the information related to the intelligent household appliance is generated. Thus, the multiple servers can obtain the information related to the intelligent household appliance which is generated by the intelligent appliance to avoid the dispute between manufacturers.

Fig. 2 is a flow chart of a method for an intelligent household appliance to access multiple servers according to another exemplary embodiment. In the present embodiment, for example, the method for an intelligent household appliance to access multiple servers can be applied in an intelligent household appliance. The method for the intelligent household appliance to access multiple servers can include the following steps.

In step 201, communication connections are established with N servers, N is an integer equal to or greater than 2, and the N servers belong to different manufacturers.

In the present embodiment, the specific implementation of step 201 can be found in the description regarding the embodiment of the present disclosure described in connection with Fig. 1, and thus repeated descriptions are omitted here.

In step 202, according to a preset sampling period, information regarding operation performance of the intelligent household appliance is sampled.

In the present embodiment, for example, the information related to the intelligent household appliance includes the information regarding operation performance of the intelligent household appliance. For the information regarding operation performance of the intelligent household appliance, a sampling period can be set in advance, and then the information regarding the operation performance of the intelligent household appliance can be sampled according to the preset sampling period. For example, if the preset sampling period is 10 minutes, the information regarding the operation performance of the intelligent household appliance can be sampled for once every 10 minutes.

The description about the information regarding the operation performance of the intelligent household appliance can be found in the descriptions of the embodiment of the method of the present disclosure described in connection with Fig. 1 and thus repeated descriptions are omitted here.

In step 203, the information regarding the operation performance of the intelligent household appliance is sent to the N servers.

In the present embodiment, the specific implementation of step 203 can be found in the descriptions about the embodiment described in connection with Fig. 1 and thus repeated descriptions are omitted here.

In view of the above, in the method for an intelligent household appliance to access multiple servers provided by the present embodiment, communication connections are established with N servers, information regarding operation performance of the intelligent household appliance is sampled according to a preset sampling period, and then information regarding operation performance of the intelligent household appliance is sent to the N servers. Thus, the multiple servers can obtain the information regarding operation performance of the intelligent household appliance which is generated by the intelligent appliance so as to avoid the dispute between manufacturers.

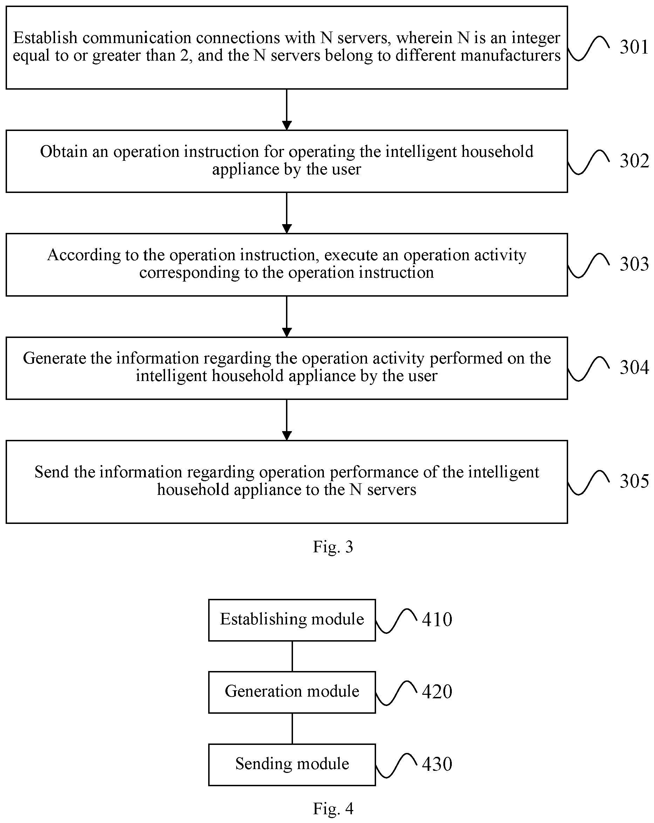

Fig. 3 is a flow chart of a method for an intelligent household appliance to access multiple servers according to another exemplary embodiment. In the present embodiment, for example, the method for an intelligent household appliance to access multiple servers can be applied in an intelligent household appliance. The method for the intelligent household appliance to access multiple servers can include the following steps.

In step 301, communication connections are established with N servers, N is an integer equal to or greater than 2, and the N servers belong to different manufacturers.

In the present embodiment, the specific implementation of step 301 can be found in the description regarding the embodiment of the present disclosure described in connection with Fig. 1, and thus repeated descriptions are omitted here.

In step 302, an operation instruction for operating the intelligent household appliance by the user is obtained.

In the present embodiment, the intelligent household appliance can obtain the operation instruction for operating the intelligent household appliance by the user. The operation instruction for operating the intelligent household appliance by the user can be an operation instruction sent from a remote associated with the intelligent household appliance by the user, or an operation instruction sent from a management APP for managing the intelligent household appliance, or an operation instruction sent via a touch screen or a button of the intelligent household appliance by the user.

In step 303, according to the operation instruction, an operation activity corresponding to the operation instruction is executed.

In step 304, the information regarding the operation activity performed on the intelligent household appliance by the user is generated.

In the present embodiment, after obtaining the operation instruction for operating the intelligent household appliance by the user, an operation activity corresponding to the operation instruction is executed, and then the information regarding the operation activity performed on the intelligent household appliance by the user is generated. For example, if the intelligent household appliance is an air conditioner, the operation instruction instructs to set the operation temperature of the air conditioner as 25 degrees; as such, the intelligent household appliance sets the operation temperature of the air conditioner as 25 degrees, and generates information regarding the operation activity of adjusting the operation temperature of the air conditioner into 25 degrees by the user.

In step 305, the information regarding the operation activity performed on the intelligent household appliance by the user is sent to N servers.

In the present embodiment, the specific implementation of step 305 can be found in the descriptions about the embodiment described in connection with Fig. 1 and thus repeated descriptions are omitted here.

In view of the above, in the method for an intelligent household appliance to access multiple servers provided by the present embodiment, communication connections are established with N servers, an operation instruction for operating the intelligent household appliance by the user is obtained, an operation activity corresponding to the operation instruction is executed according to the operation instruction and the information regarding the operation activity performed on the intelligent household appliance by the user is generated; then, the information regarding the operation activity performed on the intelligent household appliance by the user is sent to N servers. Thus, the multiple servers can obtain the information regarding the operation activity performed on the intelligent household appliance by the user which is generated by the intelligent appliance so as to avoid the dispute between manufacturers.

Embodiments of the devices of the present disclosure will be described below. The devices can be used for implementing the method of the present disclosure. For details not disclosed in the following descriptions regarding the embodiments of the devices, the previously described embodiments of the method can be referred to.

Fig. 4 is a block diagram of a device for an intelligent household appliance to access multiple servers according to an exemplary embodiment. The device can be implemented as a part or whole of an intelligent household appliance by software, hardware or a combination thereof. The device can include an establishing module 410, a generation module 420 and a sending module 430.

The establishing module 410 is configured to establish communication connections with N servers, wherein N is an integer equal to or greater than 2, and the N servers belong to different manufacturers.

The generation module 420 is configured to generate information related to the intelligent household appliance.

The sending module 430 is configured to send the information related to the intelligent household appliance to the N servers.

According to an embodiment, the information related to the intelligent household appliance includes at least one of: information regarding operation performance of the intelligent household appliance and information regarding an operation activity of a user performed on the intelligent household appliance.

In view of the above, in the device for an intelligent household appliance to access multiple servers provided by the present embodiment, communication connections are established with N servers, and information related to an intelligent household appliance is sent to the N servers after the information related to the intelligent household appliance is generated. Thus, the multiple servers can obtain the information related to the intelligent household appliance which is generated by the intelligent appliance so as to avoid the dispute between manufacturers.

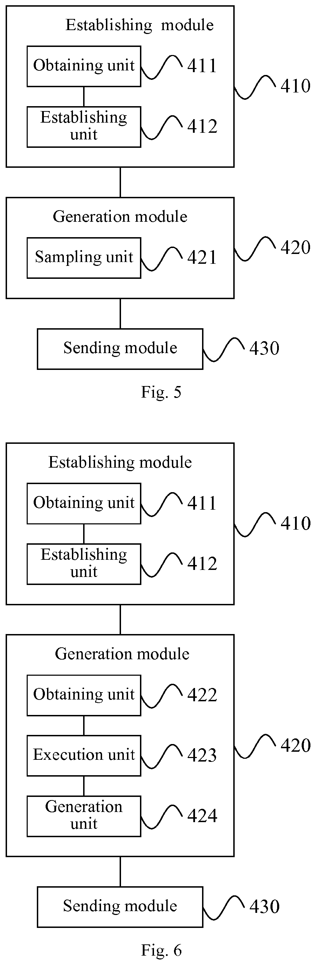

Fig. 5 is a block diagram of a device for an intelligent household appliance to access multiple servers according to an exemplary embodiment. The device can be implemented as a part or whole of an intelligent household appliance by software, hardware or a combination thereof. On the basis of the device as shown in Fig. 4, in the present embodiment, the information related to the intelligent household appliance includes the information regarding operation performance of the intelligent household appliance. The generation module 420 can include a sampling unit 421.

The sampling unit 421 is configured to, according to a preset sampling period, sample the information regarding operation performance of the intelligent household appliance.

According to an embodiment, the establishing module 410 includes an obtaining unit 411 and an establishing unit 412.

The obtaining unit 411 is configured to obtain communication addresses of the N servers which are preset in the intelligent household appliance.

The establishing unit 412 is configured to, according to the communication addresses of the N servers, establish the communication connections with the N servers.

In view of the above, in the device for an intelligent household appliance to access multiple servers provided by the present embodiment, communication connections are established with N servers, information regarding operation performance of the intelligent household appliance is sampled according to a preset sampling period, and then information regarding operation performance of the intelligent household appliance is sent to the N servers. Thus, the multiple servers can obtain the information regarding operation performance of the intelligent household appliance which is generated by the intelligent appliance so as to avoid the dispute between manufacturers.

Fig. 6 is a block diagram of a device for an intelligent household appliance to access multiple servers according to an exemplary embodiment. The device can be implemented as a part or whole of an intelligent household appliance by software, hardware or a combination thereof. On the basis of the device as shown in Fig. 4, in the present embodiment, the information related to the intelligent household appliance includes the information regarding the operation activity of the user performed on the intelligent household appliance. The generation module 420 can include an obtaining unit 422, an execution unit 423 and a generation unit 424.

The obtaining unit 422 is configured to obtain an operation instruction for operating the intelligent household appliance by the user.

The execution unit 423 is configured to, according to the operation instruction, execute an operation activity corresponding to the operation instruction.

The generation unit 424 is configured to generate the information regarding the operation activity.

According to an embodiment, the establishing module 410 includes an obtaining unit 411 and an establishing unit 412.

The obtaining unit 411 is configured to obtain communication addresses of the N servers which are preset in the intelligent household appliance.

The establishing unit 412 is configured to, according to the communication addresses of the N servers, establish the communication connections with the N servers.

In view of the above, in the device for an intelligent household appliance to access multiple servers provided by the present embodiment, communication connections are established with N servers, an operation instruction for operating the intelligent household appliance by the user is obtained, an operation activity corresponding to the operation instruction is executed according to the operation instruction and the information regarding the operation activity performed on the intelligent household appliance by the user is generated; then, the information regarding the operation activity performed on the intelligent household appliance by the user is sent to N servers. Thus, the multiple servers can obtain the information regarding the operation activity performed on the intelligent household appliance by the user which is generated by the intelligent appliance so as to avoid the dispute between manufacturers.

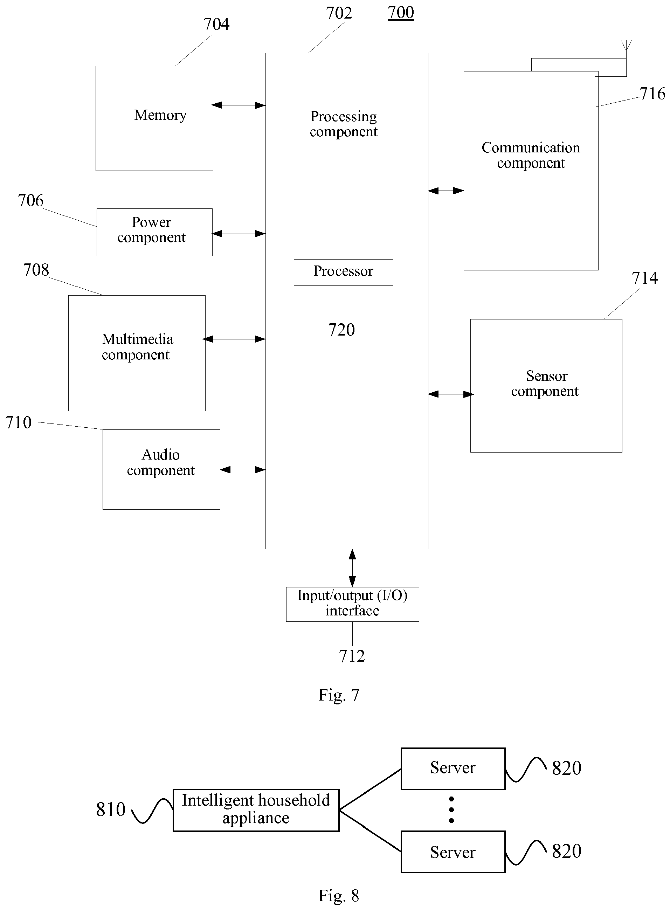

Fig. 7 is a block diagram of a device 700 for an intelligent household appliance to access multiple servers according to an exemplary embodiment. For example, the device 700 may be a smart air conditioner, a smart refrigerator, or a smart TV and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, data communications, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for online payment.

In exemplary embodiments, there is also provided a non-transitory computer-readable storage medium including instructions, such as the memory 704 including instructions executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 700, causes the device 700 to perform above method for the intelligent household appliance to access multiple servers.

Fig. 8 is a block diagram of a system for an intelligent household appliance to access multiple servers according to an exemplary embodiment. The system includes an intelligent household appliance 810 and N servers 820.

The intelligent household appliance 810 can be any one of the devices as described in connection with Figs. 4 to 7.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for an intelligent household appliance to access multiple servers, comprising:
establishing (101, 201, 301) communication connections with N servers, wherein N is an integer equal to or greater than 2, and the N servers belong to different manufacturers;
generating (102) information related to the intelligent household appliance; and
sending (103, 203, 305) the information related to the intelligent household appliance to the N servers.

2. The method according to claim 1, wherein the information related to the intelligent household appliance comprises one or more of information regarding operation performance of the intelligent household appliance and information regarding an operation activity of a user performed on the intelligent household appliance.

3. The method according to claim 2, wherein the information related to the intelligent household appliance comprises the information regarding operation performance of the intelligent household appliance, and the generating (102) the information related to the intelligent household appliance comprises:
according to a preset sampling period, sampling (202) the information regarding operation performance of the intelligent household appliance.

4. The method according to claim 2, wherein the information related to the intelligent household appliance comprises the information regarding the operation activity of the user performed on the intelligent household appliance, and the generating (102) the information related to the intelligent household appliance comprises:
obtaining (302) an operation instruction for operating the intelligent household appliance by the user;
according to the operation instruction, executing (303) an operation activity corresponding to the operation instruction; and
generating (304) the information regarding the operation activity.

5. The method according to any one of claims 1 to 4, wherein the establishing (101, 201, 301) the communication connections with the N servers comprises:
obtaining communication addresses of the N servers which are preset in the intelligent household appliance; and
according to the communication addresses of the N servers, establishing the communication connections with the N servers.

6. A device for an intelligent household appliance to access multiple servers, comprising:
an establishing module (410) configured to establish communication connections with N servers, wherein N is an integer equal to or greater than 2, and the N servers belong to different manufacturers;
a generation module (420) configured to generate information related to the intelligent household appliance; and
a sending module (430) configured to send the information related to the intelligent household appliance to the N servers.

7. The device according to claim 6, wherein the information related to the intelligent household appliance comprises one or more of information regarding operation performance of the intelligent household appliance and information regarding an operation activity of a user performed on the intelligent household appliance.

8. The device according to claim 7, wherein the information related to the intelligent household appliance comprises the information regarding operation performance of the intelligent household appliance; and
the generation module (420) comprises:
a sampling unit (421) configured to, according to a preset sampling period, sample the information regarding operation performance of the intelligent household appliance.

9. The device according to claim 7, wherein the information related to the intelligent household appliance comprises the information regarding the operation activity of the user performed on the intelligent household appliance; and
the generation module (420) comprises:
an obtaining unit (422) configured to obtain an operation instruction for operating the intelligent household appliance by the user;
an execution unit (423) configured to, according to the operation instruction, execute an operation activity corresponding to the operation instruction; and
a generation unit (424) configured to generate the information regarding the operation activity.

10. The device according to any one of claims 6 to 9, wherein the establishing module comprises:
an obtaining unit (411) configured to obtain communication addresses of the N servers which are preset in the intelligent household appliance; and
an establishing unit (412) configured to, according to the communication addresses of the N servers, establish the communication connections with the N servers.

11. A device for an intelligent household appliance to access multiple servers, comprising:
a processor 702; and
a memory (704) for storing instructions executable by the processor (702);
wherein the processor (702) is configured to:
establish communication connections with N servers, wherein N is an integer equal to or greater than 2, and the N servers belong to different manufacturers;
generate information related to the intelligent household appliance; and
send the information related to the intelligent household appliance to the N servers.

12. A system for an intelligent household appliance to access multiple servers, comprising:
an intelligent household appliance (810) and N servers (820), wherein N is an integer equal to or greater than 2;
wherein the intelligent household appliance (810) comprises the device according to any one of claims 6 to 10; or
wherein the intelligent household appliance comprises the device according to claim 11.

13. A computer program, which when executed on a processor, performs a method according to any one of claims 1 to 5.
